# EUROPEAN PATENT APPLICATION

(11) **EP 4 686 700 A1**
(43) Date of publication of application: **04.02.2026**
(21) Application number: 24192418.2
(22) Date of filing: 01.08.2024
(51) Int. Cl.: C01B 32/05, C01B 32/205, C10B 55/00, H01M 4/583, C10C 3/00, H01M 4/62, H05B 7/085

(54) **CARBON PRECURSOR MATERIAL FOR THE MANUFACTURING OF ELECTRODES AND BATTTERY MATERIALS**

(71) Applicant: Rain Carbon bv, 9060 Zelzate (BE)
(72) Inventor: Claes, Joris, 9060 Zelzate (BE); Denoo, Bram, 9060 Zelzate (BE); Van De Vyvere, Vincent, 9060 Zelzate (BE); Spahr, Michael, 6500 Bellinzona (CH)
(74) Representative: BiiP bv

(57) **Abstract**

The present invention is directed to an Ethylene Cracker Residue (ECR) based carbon precursor characterized by a weight loss rate <0.4 %(m/m)/°C at 380°C as measured in accordance with ASTM E2550. The invention is also directed to the use of such carbon precursor is a carbon precursor in the manufacturing of electrode paste for Söderberg smelters, in the manufacturing of semi-graphitized or graphitized electrodes for aluminum production, or in the manufacturing of graphitized electrodes for electric arc furnaces, or as a carbon precursor in the manufacturing of carbon-containing materials for energy storage applications. In addition, the present invention is directed to a process for producing a carbon precursor comprising the steps of providing an Ethylene Cracker Residue (ECR), exposing said ECR to thermal processing adapted for thermally inducing cracking and polymerization, subsequently exposing the thermally processed ECR to a separation step, the separation being adapted for obtaining a residue having a Mettler softening point between 100°C and 200°C in accordance with ASTM D3104, said residue being said carbon precursor.

## Description

### TECHNICAL FIELD

The present invention generally relates to a carbon precursor material derived from ethylene cracker residue. More specifically, the present invention relates to a carbon precursor material for use in the manufacturing of electrode paste for Söderberg smelters, for use in the manufacturing of semi-graphitized or graphitized electrodes for aluminum production, for use in the manufacturing of graphitized electrodes for electric arc furnaces, and for use in the manufacturing of carbon-containing materials for energy storage applications, being materials such as synthetic graphite, carbon-coated natural graphite, hard carbon, or silicon-carbon composites.

In addition, the present invention relates to a process for producing such carbon precursor material.

### BACKGROUND

Traditionally, the hydrocarbon thermoplastic carbon precursor material in the manufacturing of these graphite electrodes for electric arc furnaces and carbon anodes for aluminum production (including prebaked anodes and Soederberg anodes), is coal tar-based, because it is converted into electrically conductive carbon during the carbonization process at very high coke yield, thereby avoiding a high porosity in the resulting article due to fewer volatiles formed during the carbonization process. Also, the hydrocarbon impregnation material or coating material used as carbon precursor in the impregnation of graphite electrodes or the coating of graphite particles is typically based on coal tar distillation products.

As by-product of the production of metallurgical coke used in the steel production, coal tar has always been sufficiently available. Recently however, due to the lower demand for virgin iron and the transformation of the steel production from blast furnaces to the lower CO₂ emitting direct reduced iron (DRI) process with a reducing gas containing green hydrogen followed by electric arc furnaces for conversion of the sponge iron, less metallurgical coke is produced and hence less coal tar is available.

Another drawback of coal tar-based carbon precursors is the rather high amount of (ca. 10.000 ppm in the typical viscosity range) of benzo(a)pyrene, which is classified as carcinogenic. On top of the B(a)P content other polyaromatic hydrocarbons are considered relevant as hazardous to health and environment.

In an attempt to produce an alternative carbon precursor from petroleum sources which contain less benzo[a]pyrene than coal tar, Ethylene Cracker Residue (ECR) based carbon precursor has been considered.

However, ECR-based carbon precursors do not attain the same quality parameters as coal tar derived carbon precursors if used as a pure material in the electrode production process.

A first drawback is that it has a lower coke yield than coal tar-based carbon precursors, and secondly, it does not have any primary quinoline insoluble constituents. These primary quinoline insoluble constituents are considered as beneficial to the anode quality in aluminum production and are contained in conventional coal tar-based carbon precursors.

A second drawback is that known ECR-based carbon precursors have a typical flashpoint significantly below that of coal tar-based carbon precursors, which gives rise to safety concerns in the downstream processes that can contain hot mixing processes at temperatures up to 200°C.

A third drawback is that known ECR-based carbon precursors show rapid volatile release in electrode baking and carbonization processes. These rapidly evolving volatiles might cause issues with pitch burn wherein the evolving volatiles, which are inevitable during carbonization, are normally used as fuel for the baking furnaces, but upon early release and changes in the amount in which these are released may impact the furnace efficiency.

In addition, during the carbonization process rapidly evolving volatiles might induce microcracks in the electrode, i.e. microcracks due to local gas expansion might be formed inside the carbon bulk, which will impact several properties of the final anode in a negative way, such as lower conductivity, lower mechanical integrity, etc.

Given the above, it is a general objective of the present invention to provide an alternative for coal tar carbon precursor that allows an increased security of supply and meets the necessary requirements for use as hydrocarbon carbon precursor, particularly in the manufacturing of carbon and graphite electrodes.

Another objective of the present invention is to provide an alternative carbon precursor for coal tar-based precursor resulting in similar coke values, and similar processing and performance of graphite electrodes, prebaked anodes and pastes used in Soederberg technology, as well as carbon-containing materials for energy storage applications such as synthetic graphite, carbon-coated natural graphite, or silicon carbon composites.

In a particular objective of the present invention is to provide an alternative carbon precursor for coal tar-based precursors which does not suffer from insufficiently high flashpoints and rapid volatile release in carbonization processes.

### SUMMARY

In a first aspect the present invention provides an Ethylene Cracker Residue (ECR) based carbon precursor characterized by a weight loss rate <0.4 %(m/m)/°C at 380°C as measured in accordance with ASTM E2550.

In a second aspect of the present invention, the use of such carbon precursor is provided as a thermoplastic carbon precursor in the manufacturing of electrode paste for Söderberg smelters, in the manufacturing of semi-graphitized and graphitized electrodes for aluminum production, or in the manufacturing of graphitized electrodes for electric arc furnaces, or in the manufacturing of carbon-containing materials for energy storage applications such as synthetic graphite, carbon-coated natural graphite, or silicon-carbon composites-.

In a third aspect in accordance with the present invention, a carbon or graphite or carbon composite electrode, and particularly a battery electrode, is provided comprising said carbon precursor in converted state.

In a fourth aspect, the present invention provides a process for producing a carbon precursor comprising the steps of:
- providing an Ethylene Cracker Residue (ECR),
- exposing said ECR to thermal processing adapted to thermally induce cracking and polymerization reactions,
- subsequently exposing the thermally processed ECR to a separation step, the separation being adapted for obtaining a residue having a Mettler softening point between 100°C and 200°C in accordance with ASTM D3104, said residue being said carbon precursor.

### DETAILED DESCRIPTION

In a first aspect the present invention provides an Ethylene Cracker Residue (ECR) based carbon precursor characterized by a weight loss rate <0.4 %(m/m)/°C at 380°C as measured in accordance with ASTM E2550.

Ethylene Cracker Residue (ECR) is the highly viscous bottom product from the fractionator downstream of a steam cracker during the manufacture of olefines in a steam cracking process. An alternative name for this material is Pyrolysis Fuel Oil (PFO).

In the context of the present invention, the weight loss rate expressed in %(m/m)/°C is defined as the weight change over time (dW/dT) vs temperature as interpreted from a derivative thermogravimetric (DTG) curve. The derivative thermogravimetric (DTG) curve is a display of the first derivative of thermogravimetry data with respect to temperature from thermogravimetric analysis (TGA) in accordance with ASTM E2550 being the Standard Test Method for Thermal Stability by Thermogravimetry. In the present invention, TGA in accordance with ASTM E2550 is further specified by measuring with a heating rate of 5°C/min from 25 to 1050°C in N2 atmosphere and using an AlOx crucible.

The inventors found that an ECR-based carbon precursor characterized by a weight loss rate <0.4 %(m/m)/°C at 380°C may show a flashpoint above 250°C, or above 260°C, or even above 270°.

In addition, the inventors found that such carbon precursor suffers less from rapid volatile release in electrode baking and carbonization processes.

Without being bound by any theory, inventors found that an ECR-based carbon precursor having a weight loss rate <0.4 %(m/m)/°C at 380°C is sufficiently thermally stable (also called "stabilized" throughout this text) for preferring polymerization over further thermal cracking while heating in the carbonization process, whereas insufficiently thermally stable (also called "unstabilized" throughout this text) ECR-based carbon precursor tend to further thermal cracking resulting in insufficiently high flashpoint and rapid volatile release in carbonization processes. In the state-of-the-art, thermal stability is not considered when using ECR-based carbon precursors, whereas in the ECR-based carbon precursors of the present invention, thermal stability is considered a critical parameter.

In an embodiment of the present invention, the ECR-based carbon precursor may be characterized by a weight loss rate <0,35, preferably <0,3 %(m/m)/°C at 380°C as measured in accordance with ASTM E2550. This carbon precursor may have a flashpoint above 250°C, 260°C, or even above 270°.

In addition, the inventors found that the ECR-based carbon precursor of the present invention suffers less from rapid volatile release in electrode baking and carbonization processes.

In an embodiment of the present invention, the ECR-based carbon precursor is characterized by a weight loss rate <0.4 %(m/m)/°C at 380°C, or <0,35 or <0,3 %(m/m)/°C at 380°C, and >0.03 %(m/m)/°C at 250°C in accordance with ASTM E2550.

In an embodiment of the present invention, the ECR-based carbon precursor is further characterized by a Mettler softening point between 100 and 200°C in accordance with ASTM D3104.

Preferably, the carbon precursor of the present invention may have a Mettler softening point between 100°C and 140°C in accordance with ASTM D3104.

Inventors found that an ECR-based carbon precursor having a Mettler softening point between 100 and 200°C, or even between 100°C and 140°C, if characterized by a weight loss rate <0.4 %(m/m)/°C at 380°C, or <0,35 or <0,3 %(m/m)/°C at 380°C , may show a flashpoint above 250°C, or above 260°C, or even above 270°.

In another embodiment of the present invention, an ECR-based carbon precursor is provided having an Alcan coke value of at least 42% as measured in accordance with ASTM D4715 at a Mettler softening point of at least 110°C. Preferably, the Alcan coke value may be at least 45 or at least 50% at a Mettler softening point of at least 110°.

In a preferred embodiment in accordance with the present invention, the ECR-based carbon precursor is characterized by a weight loss rate <0.4 %(m/m)/°C at 380°C, an Alcan coke value of at least 50% and a Mettler softening point of above 110°C.

In a second aspect of the present invention, the use of a carbon precursor as described throughout this text is provided as a carbon precursor in the manufacturing of electrode paste for Söderberg smelters, in the manufacturing of semi-graphitized electrodes for aluminum production, or in the manufacturing of graphitized electrodes for electric arc furnaces, or as a carbon precursor in the manufacturing of carbon-containing materials for energy storage applications. such as synthetic graphite, carbon-coated natural graphite, or silicon-carbon composites. As stated above, the use of a carbon precursor as described throughout this text may be beneficial in the mentioned manufacturing because of its sufficiently high flash point and slower volatile release in electrode baking and carbonization processes, thereby lowering safety risks and the risk for pitch burn and microcracks in the electrode.

In a third aspect in accordance with the present invention, a carbon or graphite or carbon composite electrode, and particularly a battery electrode, is provided comprising carbon precursor as described throughout this text in converted state.

In a fourth aspect, the present invention provides a process for producing a carbon precursor comprising the steps of:
- providing an Ethylene Cracker Residue (ECR),
- exposing said ECR to thermal processing adapted to thermally induced cracking and polymerization reactions,
- subsequently exposing the thermally processed ECR to a separation step, the separation being adapted for obtaining a residue having a Mettler softening point between 100°C and 200°C in accordance with ASTM D3104, said residue being said carbon precursor,

In the context of the present invention, the thermal processing step adapted to thermally induce cracking and polymerization reactions performed at process parameters adapted for stabilizing the ECR, i.e. to continue or even substantially completing the cracking reaction of the ECR. Without being bound by any theory, inventors found that by thermally processing the ECR at operating parameters that aim to thermally induce cracking and polymerization reactions, preferably to substantially complete, i.e. exhaust, the cracking potential of the ECR, a stabilized ECR-based carbon precursor may be obtained, i.e. having a weight loss rate <0.4 %(m/m)/°C at 380°C, or even lower. As explained earlier, such ECR-based carbon precursor is sufficiently thermally stable for preferring polymerization over further thermal cracking while heating in the carbonization process, whereas insufficiently thermally stable ECR-based carbon precursor tends to further thermal cracking resulting in insufficiently high flashpoint and rapid volatile release in electrode baking and carbonization processes. Whereas in the state-of-the-art, achieving thermal stability is not considered when producing suitable carbon precursors, in the present invention, the ECR is purposely exposed to thermal processing adapted to thermally induce cracking and polymerization reactions to obtain a carbon precursor with sufficient thermal stability.

Person skilled in the art will appreciate that the thermal processing step may be performed at process parameters adapted for substantially completing the cracking reaction of the ECR and initializing condensation reactions of the aromatic rings but without introducing excessive polymerization that leads to formation of solid carbon (i.e. carbonization).

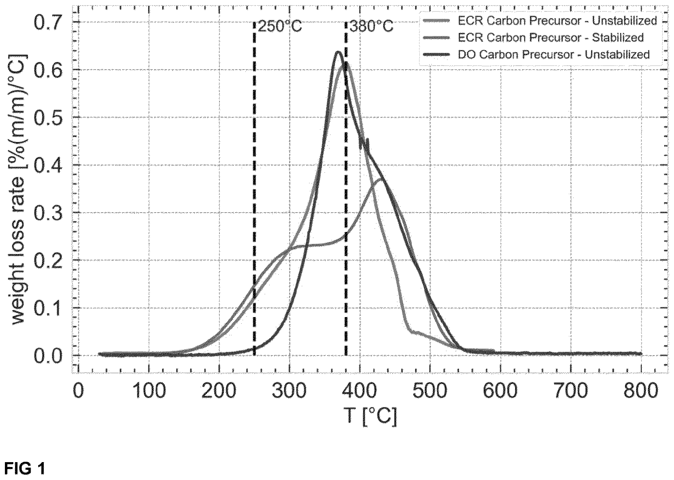

FIG 1 illustrates the weight loss rate of ECR-based precursor produced by the process of the present invention (ECR carbon precursor stabilized) versus the weight loss rate of unstabilized (i.e. no thermal processing to thermally induce cracking and polymerization) ECR-based precursor (ECR carbon precursor unstabilized), as well as unstabilized decant oil-based precursor (DO carbon precursor unstabilized).

In an embodiment of the process of the present invention, the thermal processing step comprises a stabilization stage characterized by pressures, temperatures, and residence times adapted for thermally inducing cracking and polymerization reactions in the ECR.

In a preferred embodiment, such stabilization stage may be characterized by pressures, temperatures, and residence times adapted for stabilizing the ECR, i.e. to continue or substantially completing the cracking reaction of the ECR.

In an embodiment, such stabilization stage may provide exposure to temperatures above 300°C at a pressure <= 1.5 bara for a residence time of at least 8 hours.

Alternatively, such stabilization stage may provide exposure to temperatures above 350°C at a pressure above 1.5 bara and a residence time of at least 3 minutes.

In a preferred embodiment, such stabilization stage may provide exposure to temperatures between 350-650°C at a pressure above 1.5 bara with a residence time from 3 to 60 minutes.

In a preferred alternative embodiment, such stabilization stage may provide exposure to temperatures between 300-400°C at a pressure <= 1.5 bara with a residence time from 8 to 40h.

The thermal processing may additionally comprise a lower-boiling fraction removal stage, wherein lower-boiling compounds in the ECR are removed by separation to obtain and/or maintain the desired pressure at the desired temperature in the stabilization stage. In this case the ECR may be exposed to the lower-boiling fraction removal stage followed by the stabilization stage, or the ECR under thermal processing may be recirculated between the lower-boiling fraction removal stage and stabilization stage. In the lower-boiling fraction removal stage, the process conditions are adapted to obtain and/or maintain the desired pressure at the desired temperature in the subsequent stabilization stage, i.e. the fraction of lower-boiling compounds removed from the ECR before the stabilization stage, with optional recirculation between removal stage and stabilization stage, is adapted such that the desired pressure at the desired temperature in the stabilization stage is obtained and maintained. In other words, in case such lower-boiling fraction removal stage is applied, with optional recirculation between removal stage and stabilization stage, the thermally processed ECR is a higher-boiling ECR fraction due to removal of lower-boiling fraction.

Alternatively, or in combination with foregoing embodiments, in the stabilizing stage, catalysts or reactivity inducing agents may be used. These catalysts or reactivity inducing agents may be any type of catalyst or agent suitable for promoting the cracking and/or polymerization of the aromatic constituents, such as for example organic peroxides, superacid, strong Lewis acids, oxygen or selected petroleum streams. In such case, optionally lower temperatures or shorter residence times as mentioned above may be sufficient.

In the context of the present invention, exposing the thermally processed ECR to a separation step for obtaining a residue having a Mettler softening point between 100°C and 200°C may comprise any type of separation suitable for obtaining from the thermally processed ECR a residue having a Mettler softening point between 100°C and 200°C, or preferably between 100°C and 140°C in accordance with ASTM D3104, such as distillation, flash vessel, thin layer evaporation, etc. Such separation may be performed at a pressure below 1 bara at a temperature between 300-400°C.

In a preferred embodiment, the separation step is adapted for obtaining a residue having a Mettler softening point between 100°C and 140°C in accordance with ASTM D3104.

In an embodiment, the ECR under thermal processing may be recirculated between the stabilization stage and the separation step for obtaining the carbon precursor residue having a Mettler softening point between 100°C and 200°C, or between 100°C and 140°C in accordance with ASTM D3104.

In a preferred embodiment, the present invention provides a process for producing a carbon precursor comprising the steps of:
- providing an Ethylene Cracker Residue (ECR),
- exposing the ECR to a lower-boiling fraction removal stage characterized by process parameters adapted for removing lower-boiling compounds from the ECR to obtain and/or maintain the desired pressure at the desired temperature in a following stabilization stage as described above,
- subsequently exposing the ECR (which in this case is a higher-boiling ECR fraction due to removal of lower-boiling fraction) to such stabilization stage,
- optionally recirculating the ECR under thermal processing between the lower-boiling fraction removal stage and stabilization stage,
- exposing the thermally processed ECR to a separation step adapted for obtaining a residue having a Mettler softening point between 100°C and 200°C in accordance with ASTM D3104, said residue being said carbon precursor.
optionally recirculating the ECR under thermal processing between the stabilization stage and the separation step.

Below table illustrates 3 examples of ECR based carbon precursors as described throughout this text and characterized by a weight loss rate <0.4 %(m/m)/°C at 380°C and a weight loss rate >0.03 %(m/m)/°C at 250°C in accordance with ASTM E2550 :

| | EXAMPLE 1 | EXAMPLE 2 | EXAMPLE 3 |
|---|---|---|---|
| Softening Point Mettler [°C] | 125.0 | 125.0 | 126.1 |
| Coking Value Alcan [%(m/m)] | 50.8 | 51.7 | 48.2 |
| Toluene Insolubles [%(m/m)] | 22.3 | 15.3 | 6.6 |
| Flash Point [°C] | 270 | 262 | 264 |

| | Method |
|---|---|
| Softening Point Mettler [°C] | ASTM D3104 |
| Coking Value Alcan [%(m/m)] | ASTM D4715 |
| Toluene Insolubles [%(m/m)] | DIN 51 906 |
| Thermal Stability [°C] | ASTM E2550 |
| Flash Point [°C] | ISO 3679 |

## Claims

1. An Ethylene Cracker Residue (ECR) based carbon precursor **characterized by** a weight loss rate <0.4 %(m/m)/°C at 380°C as measured in accordance with ASTM E2550.

2. A carbon precursor according to claim 1, further **characterized by** a weight loss rate >0.03 %(m/m)/°C at 250°C in accordance with ASTM E2550.

3. A carbon precursor according to claim 1 or 2, further **characterized by** a Mettler softening point between 100 and 200°C in accordance with ASTM D3104.

4. A carbon precursor according to any of the above claims having a Mettler softening point between 100°C and 140°C in accordance with ASTM D3104.

5. A carbon precursor material according to any of the above claims having an Alcan coke value of at least 42% as measured in accordance with ASTM D4715 at a Mettler softening point of at least 120°C.

6. The carbon precursor material according to any of the above claims having a flashpoint above 250°C.

7. Use of a carbon precursor according to any of the above claims as a carbon precursor in the manufacturing of electrode paste for Söderberg smelters, in the manufacturing of semi-graphitized or graphitized electrodes for aluminum production, or in the manufacturing of graphitized electrodes for electric arc furnaces.

8. Use of a carbon precursor according to any of the above claims as a carbon precursor in the manufacturing of carbon-containing materials for energy storage applications.

9. A graphite or carbon electrode comprising a carbon precursor according to any of claims 1 to 6 in converted state.

10. A process for producing a carbon precursor comprising the steps of:
- providing an Ethylene Cracker Residue (ECR),
- exposing said ECR to thermal processing adapted for thermally inducing cracking and polymerization,
- subsequently exposing the thermally processed ECR to a separation step, the separation being adapted for obtaining a residue having a Mettler softening point between 100°C and 200°C in accordance with ASTM D3104, said residue being said carbon precursor.

11. A process according to claim 10, wherein the thermal processing comprises a stabilization stage **characterized by** pressures, temperatures, and residence times adapted for thermally inducing cracking and polymerization reactions in the ECR.

12. A process according to claim 11, wherein the stabilization stage provides exposure to temperatures between 350-650°C at a pressure above 1.5 bara with a residence time from 3 to 60 minutes.

13. A process according to claim 11, wherein stabilization stage provides exposure to temperatures between 300-400°C at a pressure <= 1.5 bara with a residence time from 8 to 40h.

14. A process according to any of claims 11 to 13, wherein the thermal processing additionally comprises a lower-boiling fraction removal stage, wherein lower-boiling compounds in the ECR are removed by separation to obtain and/or maintain the desired pressure at the desired temperature in the stabilization stage.

15. A process according to any of claims 10 to 14, wherein the separation step being adapted for obtaining a residue having a Mettler softening point between 100°C and 140°C in accordance with ASTM D3104.
